# EUROPÄISCHE PATENTSCHRIFT

(11) **EP 1 537 705 B1**
(45) Veröffentlichungstag und Bekanntmachung des Hinweises auf die Patenterteilung: **12.11.2008**
(21) Anmeldenummer: 02782682.5
(22) Anmeldetag: 11.09.2002
(51) Int. Cl.: H04L 12/56, H04Q 7/30

(54) **VERFAHREN ZUM MODIFIZIEREN VON VERBINDUNGEN IN EINEM AUF DATENKOMPRIMIERUNG BASIERENDEN KOMMUNIKATIONSSYSTEM**
METHOD FOR MODIFYING CONNECTIONS IN A DATA COMPRESSION-BASED COMMUNICATIONS SYSTEM
PROCEDE POUR MODIFIER DES CONNEXIONS DANS UN SYSTEME DE COMMUNICATION BASE SUR LA COMPRESSION DE DONNEES

(43) Veröffentlichungstag der Anmeldung: 08.06.2005
(73) Patentinhaber: Nokia Siemens Networks GmbH & Co. KG, 81541 München (DE)
(72) Erfinder: BACHMANN, Frank, 10179 Berlin (DE); BAEKELANDT, Bart, B-9090 Melle (BE); HEISS, Herbert, 82178 Puchheim (DE); NEDELEC, Thierry, 83714 Miesbach (DE); SEITTER, Norbert, 82008 Unterhaching (DE)
(86) Internationale Anmeldenummer: PCT/DE2002/003472
(87) Internationale Veröffentlichungsnummer: WO 2004/028093

(56) Entgegenhaltungen:
- WO-A-01/18992
- WO-A-01/61899
- WO-A-01/91489
- "UNIVERSAL MOBILE TELECOMMUNICATIONS SYSTEM (UMTS);Mandatory speech codec; AMR speech codec; Interface to Iu and Uu (3GPP TS 26.102 VERSION 4.0.0 RELEASE 4)" ETSI TS 126 102 V4.0.0, XX, XX, März 2001 (2001-03), Seiten 1-15, XP002189088

## Beschreibung

Die vorliegende Erfindung betrifft ein Verfahren zum Ersetzen von in einem in einer Vermittlungsstelle eines auf Datenkomprimierung, wie gemäß dem UMTS-Standard, basierenden Kommunikationssystems ankommenden Datenrahmen.

Das Universal Mobile Telecommunication System (UMTS) stellt eines von mehreren Mobilfunksystemen dar, die dem Teilnehmer eines mobilen Endgerätes eine Vielzahl an Diensten zur Verfügung stellen.

UMTS arbeitet in den Bereichen von 1885-2025 MHz und 2110-2200 MHz und ermöglicht über die bisher bekannte Funktionalität der schmalbandigen Mobilfunksysteme hinaus auch Datenraten von bis zu 2 Mbit/s.

Es ist ein Ziel des Mobilfunksystems UMTS, weltweit dem Teilnehmer ein einheitliches Mobilfunksystem der dritten Generation zur Verfügung zu stellen und erstmals Roaming und Handover zwischen technisch verschiedenen Netzen, wie beispielsweise GSM (Global System for Mobile Communications) mit von Dual-Band- und Dual-Mode-Terminals zu ermöglichen.

Kommunikationsnetze, die auf UMTS-Standard basieren, erfordern aufgrund der Auswahl verschiedener Codec-Modi für einen Teilnehmer A und einen Teilnehmer B oder bei Unterbrechung von TrFO (Transcoder Free Operation) die Funktionalität, in den UMTS-Mobile-Switching-Centers (UMSC), bestehende Verbindungen von einem AMR (Adaptive-Multi-Rate)-Codec-Modus auf einen anderen AMR-Codec-Modus zu transcodieren. Über einen Sprachkanal einer Luftschnittstelle eines Mobilfunknetzes wird ein Gespräch eines Teilnehmers komprimiert, wie beispielsweise mittels eines AMR-Codec bei UMTS, übertragen. Ein AMR-Codec enthält einen für ihn spezifischen Algorithmus, der Sprachdaten komprimiert. Ein RNC (Radionetworkcontroller) eines Mobilfunknetzes handelt vor dem Aufbau einer UMTS-Sprachverbindung einen Set von AMR-Modes mit einer Vermittlungsstelle aus, über welche die Sprachverbindung laufen soll. Um weitere Information in die Verbindung bzw. das Gespräch einspeisen zu können, ist es nötig innerhalb der Vermittlungsstelle in die Verbindung einzugreifen. Auch hier ist es demnach nötig bestehende Verbindungen von einem AMR-Codec-Mode wieder auf denselben oder auf einen anderen AMR-Codec-Modus zu codieren, beispielsweise zur Einspeisung von Tönen auf TDM-Basis.

Eine derartige Transcodierung wird herkömmlicherweise durch die Decodierung von in einem ersten Codec-Modus übertragenen Daten in 160 lineare Samples mit 13 bit und einer nachfolgenden Encodierung in einen zweiten Codec-Modus durchgeführt. Es werden hierfür Daten, die innerhalb eines von einem Funknetzwerk UTRAN in einem Abstand von 20 ms gesendeten Datenrahmens an die Vermittlungsstelle übertragen werden, mittels einer Decodierungseinrichtung decodiert, wobei die Daten zuvor in einem ersten AMR(Adaptive-Multi-Rate)-Codec-Modus codiert wurden. Handelt es sich beispielsweise um Sprachdaten, so werden die in dem Sprachrahmen enthaltenen Sprachdaten nach ihrer Decodierung in linear pulscode-modulierte (PCM) Worte mit einer Länge von beispielsweise 13 bit umgewandelt. Diese werden anschließend nach einem sogenannten A/µ-Law zu Worten mit einem Informationsgehalt von 8 bit komprimiert und über das Time-Division-Multiplexing-Koppelfeld zeitmultiplext. Die zeitmultiplexten Daten werden zu linear pulscodemodulierten Worten mit einem Informationsgehalt von beispielsweise 13 bit dekomprimiert und anschließend in einem neuen AMR-Codec-Modus codiert.

Durch Verwendung des synchron funktionierenden TDM-Koppelfeld zum Einfügen von Tönen und/oder Ansagen ist eine Codierung und Decodierung nötig, was zusätzliche Codier- bzw. Decodiersystemeinheiten erfordert.

In Abhängigkeit von verschiedenen Netzabschnitten innerhalb des auf UMTS-Standard basierenden Kommunikationsnetzes können innerhalb einer Verbindung verschiedene UMTS-Standard-Versionen verwendet werden.

Die WO 01/91489 A1 offenbart ein Verfahren in einem UMTS - Kommunikationsnetz zum Modifizieren einer Verbindung zwischen sendendem und empfangenden Teilnehmern durch Entfernen von Datenrahmen.

Es war eine Aufgabe der vorliegenden Erfindung, ein Verfahren zur Verfügung zu stellen, mit deren Hilfe es möglich wird, Datenrahmen einer Verbindung durch andere Datenrahmen zu ersetzen, so dass ein Einfügen beispielsweise von Tönen und/oder Ansagen ohne eine Dekodierung auf TDM-Basis und nachfolgender Rückkodierung auf ATM-Basis durchgeführt werden kann.

Die Aufgabe wird erfindungsgemäß durch ein Verfahren gemäß Anspruch 1 gelöst. Weitere vorteilhafte Ausführungsformen der vorliegenden Erfindung sind in den entsprechenden Unteransprüchen aufgeführt.

Gemäß Anspruch 1 wird ein Verfahren zum Modifizieren einer Verbindung zwischen einem sendenden und einem empfangenden Teilnehmer in einem auf Datenkomprimierung basierenden Kommunikationssystem innerhalb einer Vermittlungsstelle bereitgestellt, wobei ein in der Vermittlungsstelle ankommender, nach einem Rahmungsprotokoll (framing-protocol) formatierter Datenrahmen, unabhängig von der Länge des Datenrahmens durch einen neuen, nach dem Rahmungsprotokoll formatierten Datenrahmen ersetzt wird, so dass ohne Qualitäts- und Zeitverlust zusätzliche Information in die Verbindung eingespeist werden kann.

Die Datenrahmen können unterschiedliche Länge haben.

In einer bevorzugten Ausführungsform des erfindungsgemäßen Verfahrens wird als ein auf Datenkomprimierung basierendes Kommunikationssystem ein UMTS-System gewählt. Denkbar ist auch die Verwendung eines GERAN-Systems (GSM Edge Radio Access Network). Das erfindungsgemäße Verfahren ist ebenfalls anwendbar bei Ersetzen von IP-Datenrahmen, deren Übertragung mittels der ATM-(Asynchronous Transfer Mode)Übermittlungstechnologie stattfindet, wobei dann durch das erfindungsgemäße Verfahren IP-Datenrahmen durch IP-Datenrahmen ersetzt werden.

Vorzugsweise ist bzw. wird sowohl der in der Vermittlungsstelle ankommende Datenrahmen wie auch der neue Datenrahmen in Abhängigkeit von ihrer jeweiligen Länge in ein oder mehrere mit je einem Paketkopffeld versehene AAL2-Pakete segmentiert.

Ferner wird in den jeweiligen Paketkopffeldern der AAL2-Pakete angezeigt, welchem Datenrahmen das jeweilige AAL2-Paket zuzuordnen ist.

In einer besonders bevorzugten Ausführungsform des erfindungsgemäßen Verfahrens wird in den jeweiligen Paketkopffeldern der AAL2-Pakete angezeigt, ob weitere nachfolgende AAL2-Pakete folgen, die einem Datenrahmen zuzuordnen sind.

Das bedeutet, dass nicht jedem in der Vermittlungsstelle ankommenden Datenrahmen genau ein Datenpaket zugeordnet wird, sondern dass das ein Datenrahmen durch zwei oder mehrere AAL2-Pakete segmentiert wird, die wiederum mittels ATM-Zellen weitergeleitet werden.

Um sicherzustellen, dass der vollständige ursprünglich in der Vermittlungsstelle angekommene Datenrahmen ersetzt wird, der in ein oder mehrere AAL2-Pakete segmentiert ist, die dann auch in der entsprechend richtigen Abfolge weitergeleitet werden, muss jeweils detektierbar sein, ob ein AAL2-Paket ein Endpaket darstellt oder nicht. Ferner muss kenntlich sein, ob ein AAL2-Paket ein Folgepaket eines vorhergehenden AAL2-Paketes darstellt und ob für ein AAL2-Paket ein Folgepaket existiert.

Gemäß ITU-T Empfehlungen I.362.2 und I.366.1 werden die Datenpakete im Paketkopffeld, in einem UMTS-System handelt es sich dabei um CPS-Pakete mit entsprechendem CPS-Paketkopffeld, markiert, um die Zugehörigkeit zu einem Datenrahmen festzulegen. Dazu wird ein Teilfeld des Paketkopffeldes, nämlich ein sogenanntes Feld UUI (user-to-user indication) verwendet. Wenn der Datenrahmen nur ein Datenpaket enthält, wird ein UUI-Wert < 27 verwendet. Wenn der Datenrahmen mehrere Datenpakete enthält, wird bei allen Datenpaketen des Datenrahmens UUI=27 gesetzt, nur beim letzen Datenpaket wird dann UUI<27 gesetzt Zum Ersetzen von Datenrahmen ist es zunächst nötig, diese Datenrahmen als Ganzes zu erkennen. Entsprechend einer bevorzugten Ausführungsform des erfindungsgemäßen Verfahrens ist es dafür nicht nötig, aus den einzelnen Datenpaketen eines Datenrahmens den vollständigen Datenrahmen wiederherzustellen. Es reicht dafür aus, ein Teilfeld des Paketkopffeldes, nämlich das bereits beschriebene UUI-Feld eines jeden Datenpaketes zu prüfen, was als "UUI-Monitoring" bezeichnet wird. Ein neuer Datenrahmen beginnt nach einem Paket mit UUI<27.

Wenn mit dem Ersetzen von Datenrahmen begonnen werden soll, dann wird erst das Ende eines Datenrahmens (Paket mit UUI<27) für die zu modifizierende Verbindung abgewartet. Dadurch soll vermieden werden, dass unvollständige Rahmen ankommen. Danach werden vollständige Rahmen durch vollständige Rahmen ersetzt.

Ein wesentlicher Punkt der Erfindung liegt darin, dass innerhalb der Vermittlungsstelle in eine Verbindung zwischen einem sendenden und einem empfangenden Teilnehmer unter Umgehung einer Codier- und einer Decodiereinrichtung und eines Time-Division-Multiplexing-Koppelfeldes weitere Information eingespeist werden kann.

Die Länge der neuen Datenrahmen werden erfindungsgemäß nunmehr spezifisch für den empfangenden Teilnehmer gewählt.

In einer weiteren bevorzugten Ausführungsform des erfindungsgemäßen Verfahrens wird in der Vermittlungsstelle in den neuen Datenrahmen, der in ein oder mehrere Datenpakete segmentiert wird, zusätzliche Information eingespeist. Die neuen Datenpakete enthalten beispielsweise einen Ton oder eine Ansage.

Vorteile der Erfindung sind vor allem darin zu sehen, dass ein Umweg über das TDM-Koppelnetz nicht mehr nötig ist. Bisher musste zum Einfügen von Tönen oder Ansagen eine Dekodierung auf TDM-Basis durchgeführt werden, dann die Töne oder Ansagen auf TDM-Basis eingefügt werden, indem Sprachbytes durch Tonbytes ersetzt wurden, und danach eine Rückkodierung auf AMR-Basis vorgenommen werden.

Die Datenrahmenlänge ist normalerweise abhängig von einem gewünschten Codec-Mode und der Nutzinformation eines jeweiligen Datenrahmens. Man kann dabei beispielsweise auch Pausen-Rahmen, sogenannte SID-Frames, die gesendet werden, wenn der Teilnehmer der Sendeseite nicht spricht, durch einen oder mehere, möglicherweise längere Ton-Rahmen ersetzen.

Zur Einspeisung zusätzlicher Information in eine Verbindung ist das erfindungsgemäße Verfahren ebenfalls anwendbar, wenn nur ein leerer Datenrahmen in der Vermittlungsstelle ankommt. Sendet ein Teilnehmer A beispielsweise keine Daten sondern werden lediglich leere Datenrahmen versendet, so kann für einen empfangenden Teilnehmer B trotzdem eine Information in die Verbindung eingespeist werden. Die Vermittlungsstelle detektiert dabei die leeren Datenrahmen und deren jeweiligen Beginn und schickt dann die Information in einem oder mehreren neuen Datenrahmen anstelle der leeren Datenrahmen zu dem empfangenden Teilnehmer B.

Wenn in der unmodifizierten Verbindung keine Datenrahmen ankommen, beispielsweise bei einer längeren Sprechpause, ist ein Ersetzen von Datenrahmen nicht möglich. In diesem Fall werden erfindungsgemäß neue Datenrahmen, beispielsweise mit Tönen, in einem für die Verbindung vorgesehenen Raster eingefügt.

Andererseits ist es auch möglich, Datenrahmen zu entfernen ohne diese zu ersetzen. Dies ist beispielsweise der Fall, wenn man Sprachpausen in eine Verbindung einfügen will.

Ferner umfasst die vorliegende Erfindung das Bereitstellen einer Vorrichtung zum Modifizieren einer Verbindung zwischen einem sendenden und einem empfangenden Teilnehmer in einem auf Datenkomprimierung basierenden Kommunikationssystem innerhalb einer Vermittlungseinrichtung, wobei ein in der Vermittlungsstelle ankommender, nach einem Rahmungsprotokoll formatierter Datenrahmen, unabhängig von der Länge des Datenrahmens durch einen neuen, nach dem Rahmungsprotokoll formatierten Datenrahmen ersetzt werden kann oder dass der in der Vermittlungsstelle ankommende Datenrahmen entfernt werden kann, oder dass bei fehlenden in der Vermittlungsstelle ankommenden Datenrahmen ein oder mehrere neue, nach dem Rahmungsprotokoll formatierte Datenrahmen generiert und in die Verbindung eingefügt werden können.

## Patentansprüche

1. Verfahren zum Modifizieren einer Verbindung zwischen einem sendenden und einem empfangenden Teilnehmer in einem auf Datenkomprimierung basierenden Kommunikationssystem innerhalb einer Vermittlungsstelle,
**dadurch gekennzeichnet,**
**dass** ein nach einem Rahmungsprotokoll formatierter, in der Vermittlungsstelle ankommender Datenrahmen, unabhängig von der Länge des Datenrahmens durch einen neuen, nach dem Rahmungsprotokoll formatierten Datenrahmen ersetzt wird und in die Verbindung eingespeist wird, oder
**dass** bei fehlenden, in der Vermittlungsstelle ankommenden Datenrahmen ein oder mehrere neue, nach dem Rahmungsprotokoll formatierte Datenrahmen generiert und in die Verbindung eingespeist werden.

2. Verfahren nach Anspruch 1,
**dadurch gekennzeichnet,**
**dass** als ein auf Datenkomprimierung basierendes Kommunikationssystem ein UMTS-System gewählt wird.

3. Verfahren nach Anspruch 2,
**dadurch gekennzeichnet,**
**dass** in Abhängigkeit von ihrer jeweiligen Länge sowohl der in der Vermittlungsstelle ankommende Datenrahmen segmentiert ankommt wie auch der neue Datenrahmen in ein oder mehrere mit je einem Paketkopffeld versehene AAL2-Pakete segmentiert wird.

4. Verfahren nach Anspruch 3,
**dadurch gekennzeichnet,**
**dass** in den jeweiligen Paketkopffeldern der AAL2-Pakete angezeigt wird, welchem Datenrahmen das jeweilige AAL2-Paket zuzuordnen ist.

5. Verfahren nach Anspruch 3 oder 4,
**dadurch gekennzeichnet,**
**dass** in den jeweiligen Paketkopffeldern der AAL2-Pakete angezeigt wird, ob weitere nachfolgende AAL2-Pakete folgen, die einem Datenrahmen zuzuordnen sind.

6. Verfahren nach Anspruch 3 oder 4 oder 5,
**dadurch gekennzeichnet,**
**dass** ein Ende eines Datenrahmens der zu modifizierenden Verbindung abgewartet wird, bevor mit dem Ersetzen begonnen wird, wofür nicht aus den AAL2-Paketen die Datenrahmen wieder erstellt werden, sondern nur durch Auswertung des jeweiligen Paketkopffeldes das Ende eines Datenrahmens festgestellt wird.

7. Verfahren nach einem der Ansprüche 3 bis 6,
**dadurch gekennzeichnet,**
**dass** die AAL2-Pakete in ATM-Zellen gefasst werden, die spezifiziert werden auf den empfangenden Teilnehmer.

## Claims

1. Method for modification of a connection between a transmitting subscriber and a receiving subscriber in a communications system, which is based on data compression, within a switching center,
**characterized**
**in that** a data frame, which is formatted on the basis of a framing protocol and arrives in the switching center is replaced independently of the length of the data frame by a new data frame formatted on the basis of the framing protocol and is fed into the connection, or
**in that**, if the data frame which arrives at the switching center is missing, one or more new data frames, which are formatted on the basis of the framing protocol, is or are generated and is or are fed into the connection.

2. The method according to Claim 1,
**characterized**
**in that** a UMTS system is chosen as a communications system based on data compression.

3. The method according to Claim 2,
**characterized**
**in that**, depending on their respective length, not only does the data frame arriving at the switching center arrive in a segmented form, but the new data frame is also segmented into one or more AAL2 packets, which are each provided with a packet header field.

4. The method according to Claim 3,
**characterized**
**in that** the packet header fields of the AAL2 packets are each used to indicate the data frame with which the respective AAL2 packet should be associated.

5. The method according to Claim 3 or 4,
**characterized**
**in that** the packet header fields of the AAL2 packets are each used to indicate whether any further subsequent AAL2 packets which can be associated with a data frame will follow.

6. The method according to Claim 3, 4 or 5,
**characterized**
**in that** an end of a data frame of the connection to be modified is waited for before the replacement process is started, for which reason the data frames are not recreated from the AAL2 packets, but the end of a data frame is defined only by evaluation of the respective packet header field.

7. The method according to one of Claims 3 to 6,
**characterized**
**in that** the AAL2 packets are combined into ATM cells, which are specified for the receiving subscriber.

## Revendications

1. Procédé pour modifier une liaison entre un usager émetteur et un usager récepteur à l'intérieur d'un centre de commutation dans un système de communication basé sur une compression de données, **caractérisé en ce qu'**une trame de données formatée selon un protocole de trame et arrivant dans le centre de commutation est remplacée, indépendamment de la longueur de la trame de données, par une nouvelle trame de données formatée selon le protocole de trame et injectée dans la liaison ou **en ce que**, en l'absence de trames de données arrivant dans le centre de commutation, une ou plusieurs nouvelles trames de données formatées selon le protocole de trame sont générées et injectées dans la liaison.

2. Procédé selon la revendication 1, **caractérisé en ce qu'**un système UMTS est choisi en tant que système de communication basé sur une compression de données.

3. Procédé selon la revendication 2, **caractérisé en ce que,** en fonction de leur longueur respective, non seulement la trame de données arrivant dans le centre de commutation arrive sous forme segmentée, mais encore, la nouvelle trame de données subit une segmentation en un ou plusieurs paquets AAL2 pourvus chacun d'un champ d'en-tête de paquet.

4. Procédé selon la revendication 3, **caractérisé en ce qu'**il est indiqué, dans les champs d'en-tête de paquet respectifs des paquets AAL2, à quelle trame de données le paquet AAL2 respectif doit être affecté.

5. Procédé selon la revendication 3 ou 4, **caractérisé en ce qu'**il est indiqué, dans les champs d'en-tête de paquet respectifs des paquets AAL2, si d'autres paquets AAL2 subséquents à affecter à une trame de données suivent.

6. Procédé selon la revendication 3 ou 4 ou 5, **caractérisé en ce qu'**on attend une fin d'une trame de données de la liaison à modifier avant de commencer à remplacer, les trames de données n'étant pas reconstruites à partir des paquets AAL2, à cet effet, mais la fin d'une trame de données étant uniquement constatée par évaluation du champ d'en-tête de paquet respectif.

7. Procédé selon l'une des revendications 3 à 6, **caractérisé en ce que** les paquets AAL2 sont regroupés en cellules ATM qui sont spécifiées pour l'usager récepteur.
